(19) Europäisches Patentamt

European Patent Office

Office européen des brevets

(11) **EP 0 762 168 A1**

(12) **EUROPÄISCHE PATENTANMELDUNG**

(43) Veröffentlichungstag:
12.03.1997 Patentblatt 1997/11

(51) Int. Cl.⁶: **G02B 6/42**

(21) Anmeldenummer: 96112419.5

(22) Anmeldetag: 01.08.1996

(84) Benannte Vertragsstaaten:
**DE FR GB SE**

(30) Priorität: **16.08.1995 DE 19529978**

(71) Anmelder: **ROBERT BOSCH GMBH**
**70442 Stuttgart (DE)**

(72) Erfinder:
- **Kuke, Albrecht, Dr.**
 **71549 Auenwald (DE)**
- **Schwaderer, Bernhard, Dr.**
 **71554 Weissach im Tal (DE)**
- **Panzlaff, Konrad, Dr.**
 **71522 Backnang (DE)**

(54) **Anordnung zur Ankopplung eines Lichtwellenleiters an ein oberflächenemittierendes Sendeelement oder an ein Empfangselement**

(57)    Es wird eine Anordnung zur Ankopplung eines Lichtwellenleiters an ein Sende- oder Empfangselement angegeben, die besonders einfach aufgebaut ist. Das Sende- oder Empfangselement (1) ist auf einem Träger (3) mit der lichtemittierenden bzw. lichtempfindlichen Fläche (2) zum Träger (3) hin angebracht. Der Lichtwellenleiter (11) weist eine zu seiner optischen Achse geneigte Stirnfläche auf. Es ist eine Reflexionsfläche (7) vorgesehen, an der der vom Sendeelement (1) gesendete Lichtstrahl, bevor er auf die Stirnfläche des Lichtwellenleiters (11) trifft, bzw. der vom Lichtwellenleiter gesendete Lichtstrahl, bevor er auf das Empfangselement trifft reflektiert wird. Der Lichtwellenleiter (11) ist auf oder in einem zweiten Träger (13) fixiert. Beide Träger (3,13) weisen eine abgeschrägte Seitenfläche (16) bzw. eine schräge Fläche (6) auf, mit denen sie aneinanderliegen. Das Sende- bzw. Empfangselement (1) ist über einer Vertiefung (4) des Trägers (3) montiert, die am Rand des Trägers (3) liegt.

Fig. 1

Printed by Rank Xerox (UK) Business Services
2.13.16/3.4

## Beschreibung

### Stand der Technik

Die Erfindung betrifft eine Anordnung zur Ankopplung eines Lichtwellenleiters, insbesondere einer Einmodenfaser, an ein oberflächenemittierendes Sendeelement, mit einem Träger, auf den das Sendeelement mit der emittierenden Oberfläche zum Träger hin montiert ist, mit einem Lichtwellenleiter, der eine zu seiner optischen Achse geneigte Stirnfläche aufweist, und mit einer Reflexionsfläche, an der der vom Sendeelement gesendete Lichtstrahl, bevor er auf die Stirnfläche des Lichtwellenleiters trifft, reflektiert wird.

Weiter betrifft die Erfindung eine Anordnung zur Ankopplung eines Lichtwellenleiters an ein Empfangselement, mit einem Träger, auf den das Empfangselement mit der lichtempfindlichen Oberfläche zum Träger hin montiert ist, mit einem Lichtwellenleiter, der eine zu seiner optischen Achse geneigte Stirnfläche aufweist, und mit einer Reflexionsfläche, an der der vom Lichtwellenleiter gesendete Lichtstrahl, bevor er auf das Empfangselement trifft, reflektiert wird.

Aus der gattungsbildenden DE 43 13 487 A1 ist eine Anordnung zur wahlweisen Verbindung mindestens eines lichtaussendenden Elementes mit einem lichtempfangenden Element bekannt. Dabei ist zwischen dem lichtaussendenden und dem lichtempfangenden Element ein Lichtwellenleiter geschaltet. Dieser Lichtwellenleiter weist eine abgeschrägte Stirnfläche auf. Ein oberflächenemittierendes Sendeelement ist auf einem Substrat montiert. Der emittierte Strahl verläuft durch das Substrat wird an einer Reflexionfläche reflektiert und trifft auf die Stirnfläche des Lichtwellenleiters.

Aus der DE 39 14 835 A1 ist eine Anordnung zur Ankopplung eines Lichtwellenleiters an ein optisches Sendeelement bekannt. Der Lichtwellenleiter und das optische Sendeelement sind auf verschiedenen Trägern fixiert, die verschiebbar aufeinanderliegen. Das Lichtbündel gelangt durch zweimalige Spiegelung an je einer auf einem Träger befindlichen Spiegelebene vom optisch aktiven Element zum Lichtwellenleiter. Durch Verschieben der Träger aufeinander wird eine Justierung erreicht. Aus der DE 43 01 455 A1 ist ein einteiliger Träger aus einkristallinem Silizium bekannt, auf dessen Unterseite ein Lichtwellenleiterende in einer V-Nut fixiert ist und auf dessen Oberseite mindestens ein Sendeelement vorgesehen ist, dessen lichtaussendende Fläche der Unterseite zugewandt ist. Der Lichtwellenleiter ist dabei in der V-Nut befestigt. Das Licht gelangt vom Sendeelement durch den Träger zum Lichtwellenleiter, wobei es an einer Fläche total reflektiert wird.

Zur Verbesserung der Ankopplung von Laserdioden an Einmodenfasern wurden oberflächenemittierende Laserdioden mit senkrechtem Resonator (VCSEL: Vertical cavity surface emitting laserdiode) entwickelt. Im Unterschied zu einer kantenemittierenden Laserdiode, deren Strahltaille einen Durchmesser um 1 $\mu$m hat, ist bei einer oberflächenemittierenden Laserdiode die Strahltaille mit ungefähr 9 bis 10 $\mu$m so groß wie die einer Einmodenfaser. Dadurch läßt sich ohne Transformation des Strahls ein nahezu 100%iger Koppelwirkungsgrad erreichen. Die Abstrahlrichtung ist entsprechend der Ausrichtung des Resonators senkrecht zur Oberfläche der Laserdiode. Um den Strahl in einen Lichtwellenleiter einkoppeln zu können, muß daher entweder der Lichtwellenleiter senkrecht zu einem planar montierten oberflächenemittierenden Sendeelement geführt werden oder das oberflächenemittierende Sendeelement muß auf einen separaten Träger montiert sein, der senkrecht zur Montageebene des Lichtwellenleiters liegt. In beiden Fällen ist eine aufwendige Montage von Laser oder Lichtwellenleiter erforderlich. Ein weiteres Problem bei der Ankopplung eines Wellenleiters an ein oberflächenemittierendes Sendeelement ergibt sich aus der hohen Rückwirkungsempfindlichkeit dieses Lasertyps. Schon kantenemittierende Laserdioden sind insbesondere bei hohen Bitraten und/oder Leistungen sehr empfindlich gegenüber Rückreflexionen aus der Ankoppeloptik und müssen daher durch besondere Maßnahmen wie Antireflexionsbeschichtungen oder Schrägstellung der reflektierenden Flächen geschützt werden. Bei einem oberflächenemittierenden Sendeelement ist dieses Problem noch verschärft, da die ebene Stirnfläche des Lichtwellenleiters direkt vor der Lichtaustrittsfläche angebracht ist. Dort ist die reflektierende Stirnfläche des Lichtwellenleiters nahezu im Bereich der Strahltaille des Laserstrahls, wo die Wellenfronten fast eben sind. Die an der Stirnfläche reflektierten Wellen werden daher mit einem sehr hohen Koppelwirkungsgrad in den Laserresonator zurückreflektiert, was zu Störungen der Laserbedingungen führt.

Aufgabe der vorliegenden Erfindung ist es, eine Anordnung zur Ankopplung eines Lichtwellenleiters an ein oberflächenemittierendes Sendeelement oder an ein Empfangselement anzugeben, die einfach aufgebaut ist. Die Aufgabe wird gelöst durch eine Anordnung mit den Merkmalen des Patentanspruches 1. Bezüglich der Anordnung zur Ankopplung eines Lichtwellenleiters an ein Empfangselement wird die Aufgabe durch eine Anordnung mit den Merkmalen des Patentanspruches 2 gelöst. Vorteilhafte Weiterbildungen sind in den Unteransprüchen angegeben.

Bei den erfindungsgemäßen Anordnungen sind der Lichtwellenleiter und das oberflächenemittierende Sendeelement bzw. Empfangselement auf zwei verschiedenen Trägern fixiert. Bei beiden Trägern ist die dem jeweils anderen Träger zugewandte Seite abgeschrägt. Dadurch wird erreicht, daß die beiden Träger zur Justage aufeinander bewegt werden können. Anschließend können die Trägerflächen durch Kleben fixiert werden. Der Träger, auf dem das oberflächenemittierende Sendeelement bzw. das Empfangselement fixiert ist, weist unter diesem Sende- bzw. Empfangselement eine Vertiefung auf. Er kann vorteilhafterweise im Mehrfachnutzen hergestellt und so vereinzelt werden, daß die Vertiefung auf der der Reflexionsfläche gegenüberliegenden Seite geöffnet wird. Es ist besonders vorteilhaft, wenn die abgeschrägte Seitenfläche des zweiten Trägers und die geneigte Stirnfläche des Lichtwellenleiters in der selben Ebene liegen. Ein integrierter Wellenleiter kann beispielsweise dann gemeinsam mit dem zweiten Träger abgeschrägt werden. Weiter ist es von Vorteil, als Lichtwellenleiter einen integrierten Streifenleiter einzusetzen, wenn das Sende- bzw. Empfangselement beispielsweise mit weiteren optoelektronischen Elementen oder integrierten optischen Elementen verbunden werden soll. Auch der Einsatz einer in einer V-Nut fixierten Lichtleitfaser ist von Vorteil, falls beispielsweise Licht aus dem oberflächenemittierenden Sendeelement in eine lange Übertragungsstrecke eingespeist werden soll, da dann kein zusätzlicher Stecker vorgesehen werden muß. Durch die Schrägstellungen von Lichtwellenleiterendfläche und Reflexionsfläche werden Rückreflexionen in das Sendeelement vermieden.

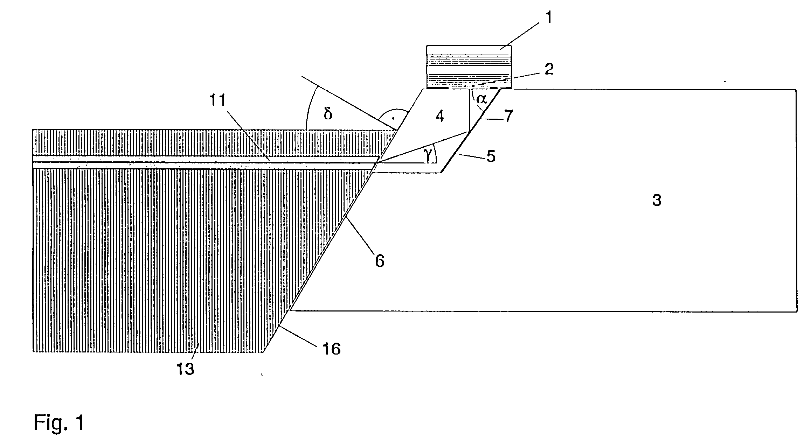

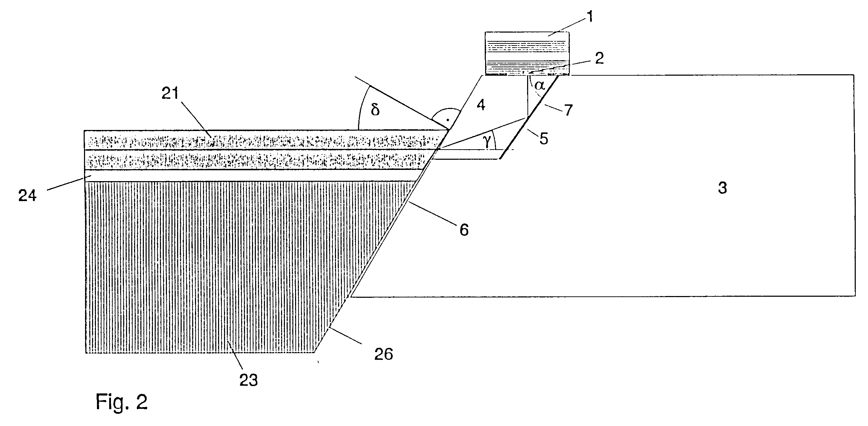

Ausführungsbeispiele der Erfindung werden anhand der Figuren 1 und 2 erläutert. Es zeigen:

Figur 1 eine Anordnung mit einem integrierten Wellenleiter und
Figur 2 eine Anordnung mit einer Lichtleitfaser.

Ein oberflächenmittierendes Sendeelement 1, beispielsweise ein VCSEL mit einer nach unten abstrahlenden Lichtaustrittsfläche 2 ist auf der Bezugsfläche eines Trägers 3, beispielsweise aus Silizium, montiert. In diesem Träger 3, dessen Oberseite (Bezugsfläche) in einer kristallographischen {100}-Ebene liegt, ist durch anisotrope Ätztechnik eine Vertiefung 4, beispielsweise eine V-Nut, mit einer Stirnfläche 5 hineingearbeitet worden. Die Stirnfläche 5 ist mit einer Spiegelschicht 7 belegt, die als Reflexionsfläche dient. Der vorteilhafterweise im Mehrfachnutzen hergestellte Träger 3 wird so vereinzelt, daß dabei die Nut 4 auf der der Stirnfläche 5 gegenüberliegenden Seite geöffnet wird. Der Träger 3 wird auf dieser Seite unter einem Winkel δ abgeschrägt, so daß eine schräge Fläche 6 entsteht. Der anzukoppelnde Wellenleiter ist entweder ein integrierter Wellenleiter 11 in einem optischen Substrat, das als Träger 13 dient, wie bei dem in Figur 1 dargestellten Ausführungsbeispiel, oder eine Lichtleitfaser 21, die in einer V-Nut 24 eines zweiten Trägers 23 aus Silizium gehalten wird, wie bei dem in Figur 2 dargestellten Ausführungsbeispiel. Der integrierte Wellenleiter 11 ist gemeinsam mit dem Träger 13 an seiner dem Träger 3 zugewandten Stirnfläche unter dem Winkel δ abgeschrägt. Ebenso wird im zweiten Ausführungsbeispiel die Seitenfläche 26 gemeinsam mit der in der V-Nut 24 fixierten Faser 21 unter dem Winkel δ abgeschrägt, so daß die Oberseiten der beiden Träger 3 und 13 bzw. 3 und 23 in zueinander parallelen Ebenen liegen. Zur Justage können die Substrate 3 und 13 bzw. 3 und 23 entlang den schrägen Flächen 6 und 16 bzw. 6 und 26 relativ zueinander bewegt und anschließend durch Kleben fixiert werden. Der Winkel δ zwischen den Normalen der abgeschrägten Seitenflächen 16 bzw. 26 und der Trägeroberseite errechnet sich aus der folgenden transzendenten Gleichung

$$\sin \delta = n_1/n_2 \cdot \sin (\gamma + \delta). \qquad (1)$$

Der Winkel γ ist der Winkel den der an der verspiegelten Stirnfläche 5 reflektierte Laserstrahl mit der optischen Achse des Wellenleiters 11 bzw. 21 einschließt. Der Winkel γ errechnet sich bei senkrechter Abstrahlung aus dem Sendeelement aus dem Böschungswinkel $\alpha = \arctan(\sqrt{2}) = 54,74°$ zwischen der Stirnfläche 5 und der Trägeroberfläche zu

$$\gamma = 2 \cdot \alpha - 90° = 19,47°. \qquad (2)$$

Der Brechungsindex vor dem Wellenleiter ist $n_1$ und im Wellenleiterkern $n_2$. Für Luft mit $n_1 = 1$ und einem integrierten Glaswellenleiter mit $n_2 = 1,5$ erhält man aus Gleichung (1) einen Neigungswinkel der Fläche 6 von $\delta = 30,89°$. Bei einer Quarzfaser mit $n_2 = 1,46$ und $n_1 = 1$ erhält man $\delta = 32,80°$.

Da die Flächen 5 und 16 gegenüber der Lichtausbreitungsrichtung geneigt sind, ist eine Rückreflexion in den Resonatorraum des Sendeelements ausgeschlossen. Gleichzeitig wird durch die Strahlführung erreicht, daß das oberflächenemittierende Sendeelement 1, also die Laserdiode, planar montiert werden kann und die Strahlen in Wellenleitern, die parallel zur Trägeroberfläche verlaufen, geführt werden können. Der Träger 3 kann gleichzeitig zur Aufnahme weiterer oberflächenemittierender Sendeelemente oder von Fasern in anisotrop geätzten V-Nuten oder von Fotodioden verwendet werden. Die Fotodioden können dabei in gleicher Weise wie das oberflächenemittierende Sendeelement 1 an weitere im Träger 13 bzw. 23 geführte Wellenleiter angekoppelt werden. Auf diese Weise lassen sich alle Ein- und Ausgangsports auch an komplexeren integriert optischen Wellenleitersubstraten mit je nach Anwendung erforderlichen Verzweigern, Kopplern oder Teilern anbringen.

Als Montagehilfe für eine genaue Positionierung der flächenemittierenden Sendeelemente auf der Oberseite des Trägers 3 können bezüglich der Nut 4 hochgenaue Justagestrukturen anisotrop geätzt werden.

## Patentansprüche

1. Anordnung zur Ankopplung eines Lichtwellenleiters, insbesondere einer Einmodenfaser, an ein oberflächenemittierendes Sendeelement,
   mit einem Träger (3) mit einer Bezugsfläche, auf der das Sendeelement (1) mit der emittierenden Seite (2) zum Träger (3) hin angebracht ist,
   mit dem Lichtwellenleiter (11), der eine zu seiner optischen Achse geneigte Stirnfläche aufweist, und
   mit einer Reflexionsfläche (7), an der der vom Sendeelement (1) gesendete Lichtstrahl, bevor er auf die Stirnfläche des Lichtwellenleiter (11) trifft, reflektiert wird,

dadurch gekennzeichnet,
daß sich der Lichtwellenleiter (11) auf oder in einem zweiten Träger (13) befindet,
daß dier Träger (13) an einer Seite bezogen auf die optische Lichtwellenleiterachse abgeschrägt ist und die abgeschrägte Seitenfläche (16) parallel zur geneigten Stirnfläche des Lichtwellenleiters (11) verläuft,
daß das Sendeelement (1) über einer im ersten Träger (3) vorgesehenen Vertiefung (4) angebracht ist, wobei die Reflexionsfläche (7) parallel zu einer Stirnfläche (5) der Vertiefung (4) verläuft,
daß der erste Träger (3) eine bezüglich der Bezugsfläche schräge Fläche (6) aufweist, derart, daß die Vertiefung (4) am Rand der Bezugsfläche (3) liegt, und
daß die Träger (3,13) mit der abgeschrägten Seitenfläche (16) und der schrägen Fläche (6) aneinanderliegen.

2. Anordnung zur Ankopplung eines Lichtwellenleiters an einem Empfangselement,
mit einem Träger mit einer Bezugsfläche, auf der das Empfangselement mit der lichtempfindlichen Seite zum Träger hin angebracht ist,
mit dem Lichtwellenleiter, der eine zu seiner optischen Achse geneigte Stirnfläche aufweist, und
mit einer Reflexionsfläche, an der der vom Lichtwellenleiter gesendete Lichtstrahl, bevor er auf das Empfangselement trifft, reflektiert wird,
dadurch gekennzeichnet,
daß sich der Lichtwellenleiter auf oder in einem zweiten Träger befindet,
daß der zweite Träger an einer Seite bezogen auf die optische Lichtwellenleiterachse abgeschrägt ist und die abgeschrägte Seitenfläche parallel zur geneigten Stirnfläche des Lichtwellenleiters verläuft,
daß das Empfangselement über einer Vertiefung des ersten Trägers angebracht ist, wobei die Reflexionsfläche parallel zu einer Stirnfläche der Vertiefung verläuft,
daß der erste Träger eine bezüglich der Bezugsfläche schräge Fläche aufweist, derart, daß die Vertiefung am Rand der Bezugsfläche liegt, und
daß die Träger mit der abgeschrägten Seitenfläche und der schrägen Fläche aneinanderliegen.

3. Anordnung nach einem der Ansprüche 1 oder 2, dadurch gekennzeichnet, daß die abgeschrägte Seitenfläche (16) des zweiten Trägers (13) und die geneigte Stirnfläche des Lichtwellenleiters (11) in der selben Ebene liegen.

4. Anordnung nach einem der Ansprüche 1 bis 3, dadurch gekennzeichnet, daß die Reflexionsfläche (7) durch Beschichten der Stirnfläche (5) der Vertiefung (4) mit einer Spiegelschicht (7) gebildet ist.

5. Anordnung nach einem der Ansprüche 1 bis 4, dadurch gekennzeichnet, daß der zweite Träger (13) einen integrierten Streifenleiter (11) aufweist.

6. Anordnung nach einem der Patentansprüche 1 bis 5, dadurch gekennzeichnet, daß der zweite Träger (23) eine V-Nut (24) und eine darin fixierte Lichtleitfaser (21) aufweist.

7. Anordnung nach einem der Ansprüche 1 bis 6, dadurch gekennzeichnet, daß die Träger (3,13) mit der abgeschrägten Seitenfläche (16) und der schrägen Fläche (6) aneinander befestigt sind.

Fig. 1

Fig. 2

| | Europäisches Patentamt | EUROPÄISCHER RECHERCHENBERICHT | Nummer der Anmeldung EP 96 11 2419 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 652 454 A (MOTOROLA INC) 10.Mai 1995 * Spalte 6, Zeile 9 - Spalte 7, Zeile 4; Abbildung 2 * --- | 1-4,6,7 | G02B6/42 |
| Y | US 4 262 362 A (KIERNAN SHERWOOD C ET AL) 14.April 1981 * Spalte 2, Zeile 54 - Spalte 3, Zeile 25; Abbildung * --- | 1-4,6,7 | |
| A,D | DE 43 13 487 A (ANT NACHRICHTENTECH) 26.Mai 1994 * Spalte 2, Zeile 13 - Spalte 3, Zeile 7; Ansprüche 3,4; Abbildung 2 * --- | 1,2,5,6 | |
| A | EP 0 646 812 A (JAPAN BROADCASTING CORP ;NGK INSULATORS LTD (JP)) 5.April 1995 * Spalte 10, Zeile 13 - Zeile 33; Abbildung 3 * --- | 1,2,5,7 | |
| A | EP 0 542 011 A (ANT NACHRICHTENTECH) 19.Mai 1993 * Seite 3, Zeile 30 - Seite 4, Zeile 24; Abbildung 1 * ----- | 1,2,7 | RECHERCHIERTE SACHGEBIETE (Int.Cl.6) G02B |

Der vorliegende Recherchenbericht wurde für alle Patentansprüche erstellt

| Recherchenort | Abschlußdatum der Recherche | Prüfer |
|---|---|---|
| BERLIN | 3.Dezember 1996 | von Moers, F |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
  Dokument

EPO FORM 1503 03.82 (P04C03)